# EUROPÄISCHE PATENTSCHRIFT

(11) **EP 4 102 207 B1**
(45) Veröffentlichungstag und Bekanntmachung des Hinweises auf die Patenterteilung: **02.07.2025**
(21) Anmeldenummer: 22175132.4
(22) Anmeldetag: 24.05.2022
(51) Int. Cl.: G01N 1/10, G01N 1/38, G01N 35/10, G01N 1/18

(54) **AUTOMATISIERTE PROBENAHME**
AUTOMATED SAMPLE COLLECTION
PRÉLÈVEMENT AUTOMATISÉ D'ÉCHANTILLONNAGE

(30) Priorität: 08.06.2021 EP 21178192
(43) Veröffentlichungstag der Anmeldung: 14.12.2022
(73) Patentinhaber: Evonik Oxeno GmbH & Co. KG, 45772 Marl (DE)
(72) Erfinder: Reuter, Christian, 45665 Recklinghausen (DE); Fridag, Dirk, 45721 Haltern am See (DE); Nordhoff, Georg, 45772 Marl (DE); Haumann, Sebastian, 45721 Haltern am See (DE); Brächer, Alexander, 45721 Haltern am See (DE); Franke, Robert, 45772 Marl (DE); Hess, Dieter, 45770 Marl (DE)
(74) Vertreter: Evonik Patent Association

(56) Entgegenhaltungen:
- EP-A2- 0 313 972
- WO-A1-01/75467
- GB-A- 2 294 761
- US-A1- 2018 180 639

## Beschreibung

Die vorliegende Erfindung betrifft eine Vorrichtung zur automatisierten Probenahme aus Behältern, die unter einem hohen Druck stehen können. Dies wird durch einen speziellen Aufbau mit mehreren Multiportventilen erreicht. Die Erfindung betrifft zudem ein Verfahren zur automatisierten Probenahme unter Verwendung der erfindungsgemäßen Vorrichtung.

Um chemische Reaktionen oder deren Verlauf analysieren zu können, ist es oft notwendig Proben aus dem Reaktionsgefäß oder anderen Behältern innerhalb des Reaktionssystems bzw. der technischen Anlage entnehmen. Die Probe ist deshalb die in dem Reaktionsgefäß oder anderen Behälter vorliegende flüssige Lösung, die dem aktuellen Reaktionszustand entspricht bzw. entsprechen sollte. Die Probenahme erfolgt deshalb üblicherweise unter den dann vorliegenden Betriebsbedingungen bzw. dem in dem betreffenden Behälter vorliegenden Bedingungen wie Druck und Temperatur. Sind diese Betriebsbedingungen eher als mild zu bezeichnen, d. h. liegen beispielsweise ein eher moderater Druck und/oder eine moderate Temperatur vor, ist eine Entnahme von Proben relativ einfach zu realisieren und kann beispielsweise auch manuell erfolgen. Es sind im Stand der Technik aber auch automatisierte Probenahmesysteme bekannt, mit denen Proben und eher milden Bedingungen gezogen werden können.

Sind die Reaktionsbedingungen jedoch drastischer ist eine Probenahme nicht so einfach möglich. Ein Beispiel sind Reaktionen, die unter einem hohen Gasdruck stattfinden, wie es beispielsweise in Autoklaven oder bei bestimmten Reaktionen wie der Hydroformylierung der Fall ist. Der hohe Gasdruck meint hier den Druck einer begasten Flüssigkeit. Zwar kann auch in diesen Fällen eine manuelle Probenahme durchgeführt werden. Dies ist jedoch aus mehreren Gründen unvorteilhaft. So liegt im Allgemeinen eine schlechte Reproduzierbarkeit vor, die Zeitauflösung ist niedrig und es ist ein hoher Personaleinsatz notwendig. Ganz abgesehen von sicherheitstechnischen Vorkehrungen sind manuelle Probenahmen unter drastischen Reaktionsbedingungen, insbesondere einem hohen Druck, sehr aufwändig. Automatisierte Systeme, die Proben auch bei einem hohen Druck entnehmen können, sind kaum bekannt oder weisen weitere Nachteile auf. Hierbei sind insbesondere Probleme durch Querkontamination möglich.

Es besteht demnach weiter ein Bedarf an Vorrichtungen zur automatischen, zeitgesteuerten Probenahme und Bevorratung von Proben aus Reaktionsgefäßen oder anderen Behältern, die unter einem erhöhten Druck von bis zu 483 bar stehen können und Temperaturen von bis zu 150°C aufweisen. Eine weitere Aufgabe war die Bereitstellung eines Verfahrens zum Entnehmen der Proben unter entsprechend drastischen Bedingungen.

Die zugrundeliegende Aufgabe der vorliegenden Erfindung konnte durch die Vorrichtung nach Anspruch 1 und das Verfahren nach Anspruch 11 gelöst werden. Bevorzugte Ausgestaltungen sind jeweils in den abhängigen Ansprüchen angegeben.

Die erfindungsgemäße Vorrichtung ist eine Vorrichtung zur automatisierten Probenahme einer flüssigen Probe aus einem Behälter, in dem ein Druck von mindestens 20 bar, vorzugsweise von mindestens 50 bar, weiterhin bevorzugt von mindestens 100 bar, besonders bevorzugt von mindestens 150 bar vorliegen kann, wobei die Vorrichtung folgendes umfasst:
- einen Probenkreislauf, der ein Multiportventil (1) mit mindestens 6 Ports, eine Zulaufleitung, eine Ablaufleitung und eine Probeschleife umfasst, wobei über den Probenkreislauf eine flüssige Probe der im Behälter vorliegenden Lösung entnommen werden kann;
- einen Lösemittelkreislauf, der einen Vorratsbehälter für das Lösemittel, ein zweites Multiportventil (2) mit mindestens 6 Ports, eine Pumpe, eine Zulaufleitung, eine Ablaufleitung und eine Lösemittelschleife umfasst, wobei über den Lösemittelkreislauf Lösemittel zur Verdünnung der Probe zugegeben werden kann;
- ein oder mehrere Probengefäße, in das bzw. in die die, vorzugsweise mit dem Lösemittel verdünnte, flüssige Probe geleitet werden kann;
- eine Probenverteilungseinheit, die ein drittes Multiportventil (3) mit mindestens 3 Ports und mindestens eine mit dem einen oder den mehreren Probengefäßen verbundene Leitung umfasst, wobei über die Leitung die aus dem Behälter entnommene Probe in das mindestens eine Probengefäß geleitet werden kann;
- eine Druckregulationseinheit, mit der die Proben auf Umgebungsdruck gebracht werden kann, wobei die Druckregulationseinheit ein weiteres Multiportventil (22) mit einer Bremskapillare umfasst und wobei das Multiportventil (22) zwischen dem Multiportventil (1) und dem Multiportventil (3) angeordnet ist; und
- einen Inertgaskreislauf, in dem ein Inertgas vorliegt, wobei der Inertgaskreislauf mindestens ein Ventil, eine Zulaufleitung, eine Ablaufleitung und Leitungen, über die alle vorhandenen Multiportventile miteinander verbunden sind, umfasst.

Die erfindungsgemäße Vorrichtung hat den Vorteil, dass die flüssigen Proben auch bei einem hohen Druck gezogen werden können. Druck im Sinne der vorliegenden Erfindung und damit auch im Sinne der Ansprüche meint einen Gasdruck. Jede Druckangabe ist dabei als Überdruck über dem Umgebungsdruck (ca. 1 bar) gemeint. Die flüssigen Proben, die entnommen werden, sind, sofern ein Druck vorliegt, begaste Flüssigkeiten. Die Probenschleife kann wiederkehrend mit Probe gefüllt bzw. durchspült werden. Soll die Probe gezogen werden, kann die Ventilstellung des ersten Multiportventils (1) so verändert werden, dass die Probenschleife nicht mehr mit dem Behälter, aus dem die Probe gezogen wird, verbunden ist. Dadurch ist es möglich, dass an die Probeschleife ein anderer Druck angelegt wird und nicht mehr der (hohe) Druck, der in dem Behälter vorherrscht, aus dem die Probe gezogen wird, vorliegen muss.

Eine Leitung im Sinne der vorliegenden Erfindung meint einen geeigneten Hohlkörper, durch den Gase und Flüssigkeiten transportiert werden können. Beispiele dafür sind Schläuche oder Rohr aus Kunststoffen oder Metallen. Entsprechende Leitungen sind in unterschiedlichsten Farben, Formen und Materialien auf dem Markt verfügbar. Abhängig von der zu beprobenden Flüssigkeit kann ein Fachmann geeignete Leitungen bzw. geeignete Schläuche oder Rohre auswählen.

Der Behälter, aus dem die Probe gezogen wird, kann jedweder Behälter sein, in dem eine Flüssigkeit vorkommt, die untersucht werden soll. Geeignet Behälter sind dem Fachmann bekannt. In einer bevorzugten Ausführungsform ist der Behälter ein Reaktor, in dem eine chemische Reaktion abläuft oder abgelaufen ist. Es können dann während der Reaktion Proben gezogen und der Verlauf der Reaktion untersucht werden.

Erfindungsgemäß ist es bevorzugt, wenn die Probenverteilungseinheit der hier beschriebenen Vorrichtung ein zusätzliches Multiportventil (4) mit mindestens 6 Ports umfasst. Dieses Multiportventil (4) ist dann das insgesamt vierte Multiportventil (4). Liegt ein solches viertes Multiportventil (4) in der Probenverteilungseinheit der erfindungsgemäßen Vorrichtung vor, ist dieses Multiportventil (4) ebenfalls mit dem Inertgaskreislauf verbunden. Das Multiportventil (4) ist außerdem über mindestens eine Leitung mit dem oder den Probengefäßen verbunden. Diese Leitungen stellen insbesondere die Ablaufleitung des einen oder der mehreren Probengefäße dar, d. h. darüber kann die Probe aus den Probengefäßen herausbefördert werden. Die mindestens eine Leitung der Probenverteilungseinheit, die über das Multiportventil (3) mit dem einen oder den mehreren Probengefäßen verbunden ist, fungiert dann als Zulaufleitung, über die das Probengefäß mit Probe befüllt werden kann.

Die erfindungsgemäße Vorrichtung erlaubt die Probenahme aus Behältern, in dem ein Druck von mindestens 20 bar, vorzugsweise von mindestens 50 bar, weiterhin bevorzugt von mindestens 100 bar, besonders bevorzugt von mindestens 150 bar vorliegt. Natürlich kann die Vorrichtung auch verwendet werden, um Proben aus einem Behälter zu entnehmen, die einen geringeren Druck als 20 bar aufweisen. Die Druckobergrenze wird durch die Eigenschaften der eingesetzten Geräte und Apparate bestimmt. Es ist im Rahmen der vorliegenden Erfindung bevorzugt, dass der Druck in dem Behälter, aus dem die Probe entnommen wird, maximal 500 bar, vorzugsweise maximal 490 bar, besonders bevorzugt maximal 480 bar beträgt.

Ausgehend von dem Druck, der in dem Behälter vorliegt, aus dem die Probe entnommen werden soll, kann es sein, dass die Probe auf Umgebungsdruck (ca. 1 bar) gebracht werden muss. Liegt in dem Behälter bereits Umgebungsdruck vor, ist das natürlich nicht notwendig. Eine normale Druckentspannung kann in recht einfacher Weise nach der Probeschleife von Multiportventil (1) erfolgen, beispielsweise über ein Ventil. Technisch ist es grundsätzlich also recht einfach zu realisieren den Druck abzulassen. Gerade wenn Proben aus Behältern entnommen werden, die unter einem hohen Druck stehen, kann es dabei zu Problemen wie Schaumbildung oder der Freisetzung eines Teils der Probe kommen. Eine Probenahme ist dann zwar trotzdem möglich, aber nachteilig. Im Rahmen der vorliegenden Erfindung weist die erfindungsgemäße Vorrichtung daher eine Druckregulationseinheit auf, mit der die Proben gezielt auf Umgebungsdruck gebracht werden können. Die Regulation durch das Ablassen des Drucks ist erfindungsgemäß nur dann notwendig, wenn eine Probe aus einem Behälter entnommen wird, der einen Druck aufweist, der höher als der Umgebungsdruck ist. Durch die Druckregulationseinheit wird ein langsames Entspannen des Drucks der Probe möglich ohne dass es zu einem Teilverlust der Probe oder zu Schaumbildung führt. Die Druckregulationseinheit umfasst ein weiteres Multiportventil (22) mit einer Bremskapillare. Das Multiportventil ist zwischen dem Multiportventil (1) und dem Multiportventil (3) angeordnet. Es gibt also eine Leitung vom Multiportventil (1) zum Multiportventil (22) und eine Leitung vom Multiportventil (22) zum Multiportventil (3). Die Bremskapillare weist insbesondere einen geeignet engen Durchmesser auf, um den Druck langsam genug ablassen zu können. In diesem Zustand kann das Multiportventil mindestens zwei Stellungen aufweisen. In Stellung I des Multiportventils sind die Leitung vom Multiportventil (1) und zum Multiportventil (3) über das Multiportventil (22) so miteinander verbunden, dass die Bremskapillare nicht durchlaufen wird. Dies kann beispielsweise bei Spülvorgängen oder in der Grundstellung so sein. In der Stellung II des Multiportventils (22) sind die Leitung vom Multiportventil (1) und zum Multiportventil (3) über das Multiportventil (22) so miteinander verbunden, dass die Bremskapillare durchlaufen wird und der Druck aus der Probe reguliert abgelassen werden kann.

In einer weiterhin bevorzugten Ausführungsform weist das Multiportventil (22) mit der Bremskapillare zusätzlich eine Vorratsschleife für Inertgas auf, welches vorteilhafterweise einen hohen Druck von mehr als 100 bar aufweist. In dieser Ausführungsform gibt es beim Multiportventil (22) mindestens zwei Stellungen. In der ersten Stellung wird die ankommende Probe über die Bremskapillare (22) geleitet und kann so entgasen. Von dort gelangt die Probe über das dritte Multiportventil (3) zum Probengefäß. Währenddessen wird die Vorratsschleife mit Inertgas unter einem hohen Druck von mindestens 100 bar befüllt. In der zweiten Stellung wird die Leitung über die die Probe am Multiportventil (22) ankommt auf die Leitung zum dritten Multiportventil (3) umgeschaltet. Eine Probe, Inertgas oder Lösemittel könnte dann ungebremst passieren. Die Vorratsschleife wird in der zweiten Stellung des Multiportventils (22) auf die Bremskapillare geschaltet. Dadurch werden Probenreste aus der Bremskapillare entfernt, um Querkontaminationen zu vermeiden. Das Inertgas wird nach Durchfahren der Bremskapillare ins Abgas geleitet.

Hinsichtlich der Temperatur, die in den Behältern bzw. bei der Probenahme vorliegen kann, ist die erfindungsgemäße Vorrichtung nur durch die Eigenschaften der eingesetzten Apparaturen, Ventile oder Leitungen begrenzt. Auch die Probeeigenschaften können eine Grenze für die maximale Temperatur darstellen. So kann es beispielsweise vorteilhaft sein, wenn die Siedetemperatur der Probe beim Entspannen nicht überschritten wird. Es ist dennoch grundsätzlich möglich, dass Proben mit der erfindungsgemäßen Vorrichtung auch bei Temperaturen > 100 °C genommen werden können.

Im Folgenden sollen die Multiportventile (1, 2, 3, 4) und die Verbindung der Ports zu den jeweiligen Leitungen, Schleifen und Gefäßen erläutert werden. Alle Multiportventile weisen mindestens 6 Ports auf, wobei auch zusätzliche Ports vorhanden sein können, die zusätzliche Funktionen erfüllen können. Die hier beschriebenen Verbindungen der Ports ist eine bevorzugte Grundausführung, die jedoch auch in gewisser Weise variiert werden kann.

Es ist gemäß der vorliegenden Erfindung bevorzugt, wenn zwei Ports des ersten Multiportventils (1) über zwei Schnittstellen mit dem Behälter, aus dem die Proben genommen werden soll, d. h. einem Einlass und einem Auslass des Behälters, zwei mit Ports mit der Probenschleife und zwei Ports mit den Leitungen des Inertgaskreislaufs verbunden sind.

Hinsichtlich des zweiten Multiportventils (2) ist es bevorzugt, wenn zwei Ports des Multiportventils (2) mit dem Vorratsbehälter für das Lösemittel, d. h. einem Einlass und einem Auslass, zwei Ports mit der Lösemittelschleife und zwei Ports mit den Leitungen des Intergaskreislaufs verbunden sind.

Insbesondere bei dem dritten und vierten Multiportventil (3, 4) können in Abhängigkeit von der Anzahl der Probengefäße mehr als 3 Ports vorhanden sein. So ist es bevorzugt, wenn zwei Ports des dritten Multiportventils (3) mit den Leitungen des Inertgaskreislaufs und der oder die anderen Ports mit dem mindestens einen Probengefäß verbunden sind. Die Anzahl der Ports ist also in Abhängigkeit von der Anzahl der Probengefäße variabel. In einer bevorzugten Ausführungsform ist je ein Port mit je einem Probengefäß verbunden. In einer Ausführungsform mit 6 Ports beim dritten Multiportventil (3) sind beispielsweise maximal 4 Probengefäße vorhanden, bei 7 Ports beim dritten Multiportventil (3) gibt es maximal 5 Probengefäße.

Ist ein viertes Multiportventil (4) vorhanden, sind vorzugsweise zwei Ports des Multiportventils (4) mit den Leitungen des Inertgaskreislaufs und die anderen Ports mit dem mindestens einen Probengefäß verbunden ist, insbesondere dem Auslass des mindestens einen Probengefäß. Es ist bevorzugt, dass die Multiportventile (3) und (4) die gleiche Anzahl an Ports aufweisen. Die Verbindung der Ports ist hier abhängig von der Anzahl der Probengefäße und den Verbindungen der Probengefäße zu dem dritten Multiportventil (3). Die Verbindungen des vierten Multiportventils (4) zu dem oder den Probengefäßen entsprechen vorzugsweise den Verbindungen des dritten Multiportventils (3) zu dem oder den Probengefäßen mit dem Unterschied, dass die Ports des vierten Multiportventils (4) mit dem Auslass des oder der Probengefäße verbunden sind, während die Ports des dritten Multiportventils (3) mit dem Einlass des oder der Probengefäße verbunden sind. Dies hat insgesamt den Vorteil, dass die Anzahl der Probengefäße variabel ist und auf die speziellen Bedürfnisse bei der jeweiligen Probenahme abgestimmt werden kann. Es kann bevorzugt sein, wenn die Multiportventile (3) und (4) parallel schalten und der jeweilige Eingangsport des einen Multiportventils dem Ausgangsport des anderen Multiportventils entspricht. Es ist jedoch auch möglich, dass beide Multiportventile (3, 4) unabhängig voneinander schalten.

In einer besonders bevorzugten Ausführungsform der vorliegenden Erfindung weist das dritte Multiportventil (3) und/oder das vierte Multiportventile (4) in der Probenverteilungseinheit jeweils einen mittleren Port auf. Ein solcher mittlerer Port ist ein gemeinsamer Port, mit dem alle anderen Ports verbunden werden können. Es ist dann bevorzugt, dass das dritte Multiportventil (3) und/oder das vierte Multiportventil (4) einen mittleren Port aufweisen, der jeweils auf die mindestens 2 anderen Ports geschaltet werden kann.

Zur Probenahme lassen sich die Multiportventile auf verschiedene Ventilstellungen eingestellt werden. Dies und die Ventilstellungen sollen nachfolgend genauer erläutert. In einer bevorzugten Ausführungsform der vorliegenden Erfindung kann das Multiportventil (1) auf mindestens zwei Ventilstellungen (I und II) eingestellt werden kann, wobei
- in der Stellung I die beiden Ports, die über die Schnittstellen mit dem Behälter verbunden sind, jeweils mit einem Port, der mit der Probenschleife verbunden ist, verknüpft sind, sodass die flüssige Probe der im Behälter vorliegenden Lösung über die Einlassschnittstelle durch die Probenschleife und über die Auslassschnittstelle zurück zum Behälter geleitet wird, wodurch die Probenschleife mit Probe befüllt wird; und
- in der Stellung II die beiden Ports, die über die Schnittstellen mit dem Behälter verbunden sind, miteinander verknüpft sind, sodass die Lösung ohne Durchfahren der Probenschleife direkt zurück zum Behälter geleitet wird, und die beiden Ports, die mit der Probenschleife verbunden sind, jeweils mit einem Port, der mit den Leitungen des Inertgaskreislaufs verbunden ist, verknüpft sind, sodass die in der Probenschleife vorhandene Probe über den Inertgaskreislauf zur Probenverteilungseinheit und von dort zu mindestens einem Probengefäß geleitet werden kann.

In der Stellung I wird demnach die Probeschleife mit der flüssigen Probe befüllt. In der Stellung II wird die Verbindung der Probeschleife zum Behälter getrennt und eine Verbindung zum Inertgaskreislauf hergestellt, wodurch eine Weiterführung der Probe bis in das oder die Probengefäße möglich wird. Dadurch, dass die Probeschleife in Stellung II auch drucktechnische von dem Behälter entkoppelt wird, wird die gewünschte automatisierte Probenahme auch bei einem hohen Druck, der im Behälter vorliegt, Es versteht sich, dass vor der Stellung II immer die Stellung I erfolgen, um die Probenschleife mit Probe zu befüllen. Andernfalls wäre keine Probenahme möglich.

Vergleichbares ist auch für das zweite Multiportventil (2) bevorzugt. In einer bevorzugten Ausführungsform der vorliegenden Erfindung kann das das Multiportventil (2) auf mindestens zwei Ventilstellungen (I und II) eingestellt werden kann, wobei
- in der Stellung I die beiden Ports, die mit dem Vorratsbehälter verbunden sind, jeweils mit einem Port, der mit der Lösemittelschleife verbunden ist, verknüpft sind, sodass das Lösemittel mithilfe der Pumpe aus dem Vorratsbehälter über die Lösemittelschleife zurück zum Vorratsbehälter geleitet wird, wodurch die Lösemittelschleife mit Lösemittel befüllt wird; und
- in der Stellung II die beiden Ports, die mit dem Vorratsbehälter verbunden sind, miteinander verknüpft sind, sodass das Lösemittel mithilfe der Pumpe aus dem Vorratsbehälter ohne Durchfahren der Lösemittelschleife direkt zurück zum Vorratsbehälter geleitet wird, und die beiden Ports, die mit der Lösemittelschleife verbunden sind, jeweils mit einem Port, der mit den Leitungen des Inertgaskreislaufs verbunden ist, verknüpft sind, sodass das in der Lösemittelschleife vorhandene Lösemittel über den Inertgaskreislauf zum Multiportventil (1) geleitet werden kann.

In einer bevorzugten Ausführungsform können die beiden Multiportventile (1) und (2) einzeln angesteuert werden, d. h. die jeweilige Stellung I oder II unabhängig von der Stellung des jeweils anderen Multiportventils eingestellt werden, Dadurch ergeben sich grundsätzlich zwei Möglichkeiten. Die erste Möglichkeit ist, dass das Lösemittel mit der in der Probenschleife vorhandenen Probe vermischt, zur Probenverteilungseinheit und von dort zu mindestens einem Probengefäß geführt wird. In diesem Fall befinden sich beide Multiportventile (1) und (2) in der Stellung II.

Die zweite Möglichkeit ist das Durchlaufen der erfindungsgemäßen Vorrichtung bzw. der Probeschleife und aller weiteren Leitungen ohne Probe, wodurch einerseits die erfindungsgemäße Vorrichtung gespült werden kann, um beispielsweise Querkontaminationen zu vermeiden, und andererseits eine Blindprobe genommen werden kann. In diesem Fall wird also auf eine erneute Probenahme verzichtet, d. h. das Multiportventil (1) bleibt in Stellung I und nur das Multiportventil (2) befindet sich in Stellung II. Es ist in diesem Zusammenhang möglich, dass beim Spülen das Lösemittel nicht durch ein Probengefäß geleitet, sondern direkt zum Auslass geführt wird. Dadurch kann eine Verschmutzung der Probengefäß vermieden werden. Wird eine Blindprobe genommen, wird diese natürlich in ein Probengefäß geleitet.

Es ist weiterhin bevorzugt, dass das zweite Multiportventil (2) mit der Zulaufleitung des Inertgaskreislaufs verbunden ist. Das bedeutet, dass das Inertgas also zunächst zum Multiportventil (2) geleitet wird und dann schließend erst zum ersten Multiportventil gelangt. Ein solcher Lösemittelkreislauf hat den Vorteil, dass nicht zuerst die Probe durch das Inertgas aus der Probeschleife verdrängt werden muss, sondern das Lösemittel als Puffer zwischen Inertgas und Probe fungiert und die Probe verdünnt. Das Lösemittel bzw. die Möglichkeit Lösemittel durch die Probeschleife zu führen hat auch den weiteren Vorteil, dass die Probeschleife gesäubert werden kann. Dadurch können Querkontaminationen zwischen aufeinanderfolgenden Proben vermieden werden.

Als Pumpe für den Lösemittelkreislauf kann jede geeignete Pumpe eingesetzt werden. Entsprechende Pumpen sind dem Fachmann bekannt. Die Pumpe des Lösemittelkreislaufs ist erfindungsgemäß vorzugsweise eine HPLC-Pumpe, eine Membranpumpe, eine Kreiselpumpe, eine Zahnradpumpe oder eine Zahnringpumpe.

Der Inertgaskreislauf der erfindungsgemäßen Vorrichtung enthält ein Inertgas. Als Inertgas kann jedes Gas eingesetzt werden, das sich zu dem Probenmaterial inert verhält. Eine Reaktion zwischen Probe und Inertgas darf nicht stattfinden, um die Probe nicht zu verfälschen. Bevorzugt ist das Inertgas ein bekanntes Inertgas, insbesondere Stickstoff, Argon oder Helium. Besonders bevorzugt ist Stickstoff. Das Inertgas kann aus einer geeigneten Quelle dem Inertgaskreislauf zugeführt wird, beispielsweise aus einer Gasflasche oder aus am Standort der Vorrichtung verfügbaren Inertgasleitungen. Die Zuführung und Dosierung des Inertgases in den Inertgaskreislauf erfolgen über das vorhandene Ventil. Dieses Ventil des Inertgaskreislaufs ist vorzugsweise ein Magnetventil oder ein Pneumatikventil, vorzugsweise ist es aber ein Magnetventil. Diese Ventile ermöglichen die exakte Dosierung und können bevorzugt automatisiert gesteuert werden.

Der Inertgaskreislauf weist einen Restauslass auf, über den Proben und/oder Lösemittel und/oder das Inertgas aus der Vorrichtung entfernt werden. Es kann aber auch eine Sammeleinrichtung vorliegen, in dem Proben und Lösemittel gesammelt werden bevor sie entsorgt werden. Denkbar wäre hier ein geeigneter Abfallbehälter. Es ist aber auch denkbar, dass in dem Fall, dass Probe und Lösemittel keine gefährlichen Substanzen enthalten, direkt und ohne Abfallbehälter in die Kanalisation entsorgt werden. Es wäre weiterhin möglich, dass die Probe zurück in den Behälter geführt wird, aus dem sie entnommen worden ist. Dazu sollte dann aber ein Lösemittel verwendet werden, welches auch bereits in diesem Behälter vorhanden ist, beispielsweise als Lösemittel oder als Reaktand oder Produkt einer chemischen Reaktion.

Das bei der Probenahme und/oder bei einer nachfolgenden Spülung anfallende überschüssige Inertgas kann vorzugsweise über den Abfallbehälter, ins Abgas geleitet werden. Dazu kann der Abfallbehälter über eine mit im Inertgaskreislauf vorhandene, inertisierte Abgasleitung über Dach entspannt werden. Eine solche Abgasleitung kann auch der Vorratsbehälter für das Lösemittel aufweisen, um dort anfallende Gase, beispielsweise auch Reste des Inertgases ins Abgas zu leiten bzw. zu entspannen.

In einer besonders bevorzugten Ausführungsform der vorliegenden Erfindung umfasst der Inertgaskreislauf, worüber alle vorhandenen Multiportventile miteinander verbunden sind, die folgenden Leitungen:
- eine Leitung, die über ein Ventil, mit dem die Inertgaszufuhr gesteuert werden kann, von einer Inertgasquelle zum zweiten Multiportventil (2) führt;
- eine Leitung, die vom zweiten Multiportventil (2) zum ersten Multiportventil (1) führt;
- eine Leitung, die vom ersten Multiportventil (1) zum weiteren Multiportventil (22) führt;
- eine Leitung, die vom weiteren Multiportventil (22) zum dritten Multiportventil (3), vorzugsweise zum mittleren Port des dritten Multiportventils (3), führt;
- mindestens eine Leitung, vorzugsweise zwei oder mehr Leitungen, die vom dritten Multiportventil (3) zu dem mindestens einen oder den mehreren Probengefäßen führen;
- jeweils eine Leitung, die von jedem Probengefäß zum Restauslass führt, vorzugsweise jeweils eine Leitung, die von jedem Probengefäß zu einem der Ports des vierten Multiportventils (4) führt, wobei diese Ports jeweils auf einen zusätzlichen Port geschaltet werden können, und eine Leitung, die vom zusätzlichen Port des vierten Multiportventils (4) zum Restauslass führt.

Hinsichtlich der Probengefäße soll im Rahmen der vorliegenden Erfindung mindestens ein Probengefäß vorliegen. Für bestimmte Anwendungen kann es jedoch von Vorteil sein, wenn die erfindungsgemäße Vorrichtung zwei oder mehr Probengefäße umfasst. Sind nämlich zwei oder mehr Probengefäße vorhanden, können mehrere Proben automatisiert in zeitlich sehr kurzen Abständen hintereinander genommen werden, was manuell nur schwierig durchführbar wäre. Dies ist insbesondere bei der Untersuchung/Beprobung sehr schneller Reaktionskinetiken von Vorteil. Geeignete Probengefäße sind dem Fachmann grundsätzlich bekannt. Beispiele sind einfache Kunststoff- oder Glasgefäße, beispielsweise entsprechende Vials, Röhrchen oder Küvetten. Die Probengefäße sind gemäß der vorliegenden Erfindung vorzugsweise Vials, besonders bevorzugt Glasvials, die bei einer gaschromatischen Analyse eingesetzt werden können. Das oder die Probengefäße sind vorzugsweise jeweils mit einem Septum verschlossen. Ein geeignetes Septum ist beispielsweise ein Septum, welches durch eine Kanüle durchstoßen werden kann und dabei mechanisch und chemisch ausreichend stabil bleibt. Eine solche Kanüle, die das Septum durchstößt, kann dann den Einlass und den Auslass darstellen. Vorzugsweise sind mindestens zwei Kanülen, je eine für den Einlass und den Auslass, vorhanden.

Das oder die Probengefäße können in einer Halterung, beispielsweise einem Probenblock angeordnet sein. Dadurch kann die Handhabung vereinfacht und Lagerung der Probengefäße vereinfacht werden. Zur Erhöhung der Sicherheit können die Probengefäße auch jeweils in einem Becher angeordnet sein, wobei der Becher als Berstschutz dient. Unterhalb der Halterung bzw. unterhalb des Probenblocks kann außerdem eine Auffangschale angeordnet sein, um aus den Probengefäßen auslaufende Flüssigkeit auffangen zu können. Entsprechende Auffangschalen können auch unter dem Vorratsbehälter und/oder dem Abfallbehälter angeordnet sein. Unnötige und ggf. bedenkliche Verschmutzungen und Kontamination der Arbeitsumgebung der erfindungsgemäßen Vorrichtung mit den eingesetzten Substanzen, d. h. Lösemittel und Probe, können so vermieden werden.

Ein weiterer Gegenstand der vorliegenden Erfindung ist ein Verfahren zur automatischen Probenahme einer flüssigen Probe aus einem Behälter, in dem ein Druck von mindestens 20 bar, vorzugsweise von mindestens 50 bar, weiterhin bevorzugt von mindestens 100 bar, besonders bevorzugt von mindestens 150 bar vorliegen kann, unter Verwendung der erfindungsgemäßen und vorherig beschriebenen Vorrichtung, wobei
a) eine flüssige Probe aus dem Behälter entnommen und in der Probeschleife des Probenkreislaufs zwischengelagert wird;
b) ein Lösemittel aus dem Vorratsbehälter entnommen und in der Lösemittelschleife des Lösemittelkreislaufs zwischengelagert wird;
c) ein Inertgas in den Leitungen des Inertgaskreislaufs vorliegt; und
d) zur Entnahme der Probe die Stellung des vorhandenen Ventils und der Multiportventile geändert wird, so dass das in der Lösemittelschleife zwischengelagerte Lösemittel durch das Inertgas zu der in der Probeschleife zwischengelagerten Probe geleitet wird und die mit dem Lösemittel verdünnte Probe von dort über die Probenverteilungseinheit zu einem oder mehreren Probengefäß transportiert wird.

Sollte ein Spülen der erfindungsgemäßen Vorrichtung durchgeführt werden, wird auf den Schritt a) verzichtet, also keine Probe in der Probenschleife zwischengelagert. Es ist grundsätzlich auch denkbar, dass die Probe ohne Lösemittel gezogen wird. In diesem Fall wird die Probe durch das Inertgas aus der Probeschleife zum Probengefäß gedrückt. In diesem Fall kann auf Schritt b) verzichtet werden. Schritt d) ändert sich dann jeweils entsprechend.

Das Ventil ist hier das Ventil des Inertgaskreislaufs. Die Multiportventile sind die vorhandenen Multiportventile (1), (2) und (3). Die Stellung des/der Ventile des Inertgaskreislaufs und der Multiportventile (1), (2) und (3) wurden im Hinblick auf die Vorrichtung bereits diskutiert. Die Multiportventile (1) und (2) können vorzugsweise auf die Stellung I und die Stellung II eingestellt werden. Das oder die Ventile des Inertgaskreislaufs können vorzugsweise geöffnet oder geschlossen sein. Das dritte Multiportventil (3) kann je nach Anzahl der Probengefäß verschiedene Stellungen einnehmen. Eine bestimmte Stellung des dritten Multiportventils (3) ist die, bei der das Multiportventil (3) direkt auf den Restauslass geschaltet ist und nicht zum Probengefäß geleitet wird.

Die Grundstellung der Ventile und der Multiportventile der erfindungsgemäßen Vorrichtung betrifft den Zeitpunkt im Verfahren, bevor eine (neue) Probe genommen wird. Die Grundstellung zeichnet sich dadurch aus, dass
- das mindestens eine Ventil des Inertgaskreislaufs geschlossen ist;
- das erste Multiportventil (1) auf Stellung I eingestellt ist;
- das zweite Multiportventil (2) auf Stellung I eingestellt ist;
- das Multiportventil (22) auf Stellung I eingestellt ist, wobei die Leitung vom Multiportventil (1) und zum Multiportventil (3) über das Multiportventil (22) so miteinander verbunden sind, dass die Bremskapillare nicht durchlaufen wird;
- der mittlere Port des dritten Multiportventils (3) auf den Port geschaltet, der zum Restauslass oder, sofern vorhanden, zum vierten Multiportventil (4) führt; und
- der Port des Multiportventils (4), sofern vorhanden, der mit dem dritten Multiportventil (3) verbunden ist, ist auf den mittleren Port des vierten Multiportventils geschaltet ist, wobei der mittlere Port zum Restauslass führt.

Es kann bevorzugt sein, wenn die Pumpe des Lösemittelkreislaufs, sofern sich alle vorhandenen Ventile und Multiportventile in der Grundstellung befinden, nicht fördert. Ausgehend von dieser Grundstellung müssen die Stellungen der der Ventile und der Multiportventile verändert werden, um erfindungsgemäß eine Probe aus dem Behälter zu entnehmen. Dabei ist es grundsätzlich möglich, dass die Stellung aller Ventile und Multiportventile auf einmal geändert wird. Es ist jedoch im Rahmen der vorliegenden Erfindung bevorzugt, wenn die Stellung der Ventile und der Multiportventile sukzessive geändert wird.

In einer bevorzugten Ausführungsform wird zuerst das Ventil des Inertgaskreislaufs geöffnet. Die Umstellung der anderen Multiportventile erfolgt erst danach. Gemäß dem vorliegenden Verfahren wird zur Entnahme der Probe die oben beschriebene Grundstellung der vorhandenen Ventile (inkl. Multiportventile) nach der folgenden, veränderlichen Reihenfolge geändert:
1) das mindestens eine Ventil des Inertgaskreislaufs geöffnet wird, vorzugsweise für mindestens 5 Sekunden und bis zu 120 Sekunden, besonders bevorzugt für bis zu 90 Sekunden;
2) der mittlere Port des dritten Multiportventils (3) wird auf den Port geschaltet, der zu einem Probengefäß führt, um das Probengefäß mit Inertgas zu Spülen, und optional wird ein Port des vierten Multiportventils (4), der vom Probengefäß kommt, wird auf den mittleren Port des vierten Multiportventils (4) in Richtung Restauslass geschaltet;
3) das mindestens eine Ventil des Inertgaskreislaufs wird geschlossen;
4) das zweite Multiportventil (2) wird auf Stellung II geschaltet;
5) das erste Multiportventil (1) wird auf Stellung II geschaltet;
6) das Ventil des Inertgaskreislaufs wird geöffnet;
7) der mittlere Port des dritten Multiportventils (3) wird auf den Port geschaltet, der zum Restauslass oder - sofern vorhanden - zum vierten Multiportventil (4) führt, wobei wenn der mittlere Port des dritten Multiportventils zum vierten Multiportventil (4) führt, ein Port des Multiportventils (4) auf den Port geschaltet wird, der zum Restauslass führt; und
8) alle Ventile (inkl. Multiportventile) gehen wieder in die Grundstellung.

Es ist zu ergänzen, dass die Pumpe des Lösemittelkreislauf zu fördern beginnt bevor Schritt 4) durchgeführt wird. Weiterhin sollte, sofern eine begaste Flüssigkeit entnommen wird, die Bremskapillare der Druckregulationseinheit durchfahren werden. Dann müsste auch das entsprechende Multiportventil (22) auf Stellung II geschaltet werden. Dies kann vorzugsweise vor Schritt 6) erfolgen. Das Starten der Pumpe kann zeitglich mit einem der Schritte 1) bis 3) oder auch dazwischen erfolgen. Weiterhin wird diese Pumpe in Schritt 8) auch wieder abgestellt.

Sollte die erfindungsgemäße Vorrichtung gespült oder eine Blindprobe gezogen werden, wird auf Schritt 5) verzichtet, wodurch nur Lösemittel durch die Leitungen der Vorrichtung geleitet wird. Für den Fall, dass die Probe ohne Lösemittel gezogen werden soll, wird auf den Schritt 4) verzichtet. Dadurch wird die Probe nur durch das Inertgas aus der Probeschleife gedrückt.

Die vorgenannte Reihenfolge dient der Illustration des vorliegenden Verfahrens. Es ist bereits angeführt worden, dass die Multiportventile auch anders miteinander verknüpft werden können oder ein anderer Ablauf gewählt werden kann. So wäre es auch möglich, dass das zweite Multiportventil (2) auch in der Grundstellung, also Stellung I, verbleibt, Schritt 5) demnach nicht durchgeführt wird. Dadurch könnte man eine unverdünnte Probe bereitstellen, was für bestimmte Anwendungen sinnvoll ist. Die exemplarische Reihenfolge umfasst auch nicht die Möglichkeit, dass eine Blindprobe genommen wird. In einem solchen Fall würde das erste Multiportventil (1) in der Grundstellung, also Stellung I, verbleiben und Schritt 4) würde nicht durchgeführt. So würde nur Lösemittel zum Probengefäß geleitet und als Blindprobe untersucht werden.

Die Ventilstellung der einzelnen Schritte 1) bis 8) oder aller alternativen Verfahrensvarianten wird üblicherweise für eine gewissen Zeit gehalten, um sicherzustellen, dass die Flüssigkeiten und Gase sich auch ausreichend durch die Leitungen geführt werden. Eine exakte Bestimmung einer Mindestdauer für die Ventilstellung kann jedoch nur schwer angegeben werden, weil dies vom exakten Aufbau und den eingesetzten Ventilen, Leitungen, usw. abhängt. In einer bevorzugten Ausführungsform der vorliegenden Erfindung wird die Ventilstellungen der einzelnen Schritte 1) bis 8) oder aller alternativen Verfahrensvarianten für 1 bis 120 Sekunden, vorzugsweise für 5 bis 90 Sekunden gehalten.

Das Besondere an dem vorliegenden Verfahren ist somit, dass es auch in kurzer Zeit möglich ist eine inerte nicht rückvermischte Probe zu ziehen. Geht man von der Grundstellung aus, kann die erste Probe nach dem Spülen mit Inertgas in den Schritten 1) bis 3) innerhalb weniger Sekunden gezogen werden. Ist die erste Probe genommen, muss zunächst wieder gespült werden, bevor eine weitere Probe gezogen werden. Das ist der zeitbestimmende Schritt des erfindungsgemäßen Verfahrens. Trotzdem sind die zeitlichen Abstände zwischen zwei Proben vergleichsweise gering und beträgt weniger als 150 Sekunden, vorzugsweise weniger als 135 Sekunden, vorzugsweise weniger als 120 Sekunden. Die Gesamtdauer des Verfahrens der Schritte 1) bis 8) beträgt deshalb vorzugsweise maximal 480 Sekunden, weiterhin bevorzugt maximal 300 Sekunden, besonders bevorzugt maximal 200 Sekunden.

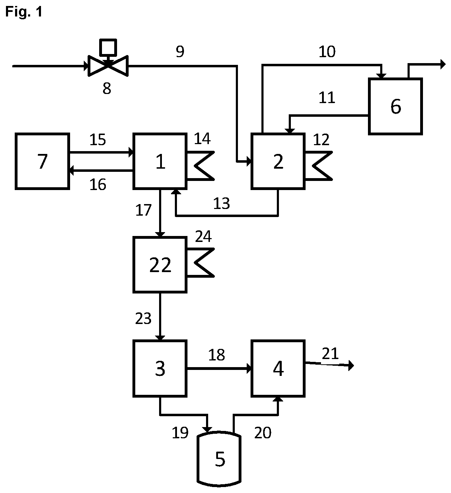

Die erfindungsgemäße Vorrichtung wird in der Fig. 1 schematisch dargestellt. Es handelt sich um eine beispielhafte Ausführungsform, die die vorliegende Erfindung nicht beschränken soll.

Fig. 1 zeigt eine Ausführungsform mit 5 Multiportventilen (1, 2, 3, 4, 22). Der Probenkreislauf ist dabei durch das erste Multiportventil (1), eine Zulaufleitung (15) aus dem Behälter (7), eine Ablaufleitung (16) zum Behälter (7) und die Probeschleife (14) definiert. Der Lösemittelkreislauf umfasst einen Vorratsbehälter (6) für das Lösemittel, das zweite Multiportventil (2), eine Zulaufleitung (11) vom Vorratsbehälter (6), eine Ablaufleitung (10) zum Vorratsbehälter (6) und eine Lösemittelschleife (12). Die Pumpe, mit der das Lösemittel vom Vorratsbehälter (6) über die Zulaufleitung (11) zum Multiportventil (2) geführt wird, ist hier nicht eingezeichnet. Das oder die Probengefäße (5) werden über die Probenverteilungseinheit befüllt, die ein drittes Multiportventil (3), mindestens eine mit dem Probengefäß (5) verbundene Leitung (19), mindestens eine vom Probengefäß (5) wegführende und mit dem vierten Multiportventil verbundene Leitung (20) und das vierte Multiportventil (4). Es versteht sich, dass das vierte Multiportventil hier auch weggelassen werden kann. Das weitere Multiportventil (22) mit Bremskapillare (24) stellt die Druckregulationseinheit dar, mit der kontrolliert Druck abgelassen werden kann und gezieltes und langsames Entspannen der Probe möglich wird. Alle vorhandenen Multiportventile (1, 2, 3, 4, 22) sind über den Inertgaskreislauf verbunden. Der Inertgaskreislauf umfasst ein Ventil (8) mit dem der Zustrom von Inertgas gesteuert wird. Das Inertgas gelangt über die Zulaufleitung (9) in die Vorrichtung und wird zunächst zum zweiten Multiportventil (2) geführt. Die Ablaufleitung (21) des Inertgaskreislaufs führt dann vom vierten Multiportventil (4) zum Restauslass. Über den Inertgaskreislauf sind alle vorhandenen Multiportventile (1, 2, 3, 4, 22) mittels der Leitungen (13, 17, 18, 23) verbunden. Zur Probenahme wird zunächst die Probenschleife (14) befüllt (Stellung I wie oben beschrieben). Anschließend wird die Probe mit Inertgas ggf. mit Lösemittel aus der Lösemittelschleife (12) von der Probeschleife (14) über die Leitung (17) zum Multiportventil (22), von dort über Leitung 23 zum Multiportventil (3) und von dort über Leitung (19) zum Probengefäß (5) geleitet.

### Beispiele

In einem erfindungsgemäßen Probenahmesystem, welches schematisch in der Fig. 1 gezeigt ist, wurden die Probenahme bei einem hohen Druck geprüft.

### Beispiel1:

In einem Reaktor (Parr Instrument Company HD-Autoklav 250 ml) wurde Toluol vorgelegt. Der Reaktor durch Aufdrücken mit Stickstoff auf 200 bar gebracht und auf 145 °C erhitzt. Nach Erreichen von Druck und Temperatur wurde Di-iso-Buten im Massenverhältnis Toluol/Di-iso-Buten 80:20 zudosiert und das entstehende Gemisch mit dem erfindungsgemäßen Probenahmesystem durch wiederholte Probenahme untersucht. Proben wurden dabei nach 3 Minuten, 6 Minuten, 10 Minuten, 15 Minuten, 30 Minuten, 45 Minuten, 60 Minuten, 90 Minuten, 1200 Minuten und 2400 Minuten entnommen und mittels Gaschromatographie (Detektor FID) auf das Massenverhältnis untersucht. Dabei wurde reproduzierbar ein Massenverhältnis von 80:20 von Toluol zu Di-iso-Buten gefunden.

### Beispiel 2:

In einem Reaktor (Parr Instrument Company HD-Autoklav 250 ml) wurden 135g Toluol mit einem Katalysatorsystem bestehend aus 12 mg Rh(acac)CO₂ und 0,15g Alkanox P240 vorgelegt. Das Gemisch wurde auf 140 °C erhitzt, durch Aufdrücken von Synthesegas (CO : H₂ ca. 50:50) auf 170bar gebracht und durchmischt.

Nach Erreichen von Druck und Temperatur wurden 30g 2-Ethyl-1-Hexen zudosiert und die ablaufende Hydroformylierungsreaktion mit dem erfindungsgemäßen Probenahmesystem (Fig. 1) durch wiederholte Probenahme untersucht. Proben wurden dabei nach 15 Minuten, 15 Minuten, 30 Minuten, 45 Minuten, 75 Minuten, 135 Minuten und 195 Minuten entnommen und mittels Gaschromatographie (Detektor FID) auf das Massenverhältnis der Reaktanden untersucht.

**Tabelle1: Ergebnisse der Gaschromatographie nach automatischer Probenahme**

| | | | | | | | |
|---|---|---|---|---|---|---|---|
| Reaktionszeit/ min | 0 | 15 | 30 | 45 | 75 | 135 | 195 |
| Probenahmesystem GC Umsatz Alkene / % | 0 | 6,1 | 22,9 | 71,1 | 93,8 | 99,5 | 99,9 |

## Patentansprüche

1. Vorrichtung zur automatisierten Probenahme einer flüssigen Probe aus einem Behälter, in dem ein Druck von mindestens 20 bar, vorzugsweise von mindestens 50 bar, weiterhin bevorzugt von mindestens 100 bar, besonders bevorzugt von mindestens 150 bar vorliegen kann, wobei die Vorrichtung folgendes umfasst:
• einen Probenkreislauf, der ein erstes Multiportventil (1) mit mindestens 6 Ports, eine Zulaufleitung (15), eine Ablaufleitung (16) und eine Probeschleife (14) umfasst, wobei über den Probenkreislauf eine flüssige Probe der im Behälter vorliegenden Lösung entnommen werden kann;
• einen Lösemittelkreislauf, der einen Vorratsbehälter (6) für das Lösemittel, ein zweites Multiportventil (2) mit mindestens 6 Ports, eine Pumpe, eine Zulaufleitung (11), eine Ablaufleitung (10) und eine Lösemittelschleife (12) umfasst, wobei über den Lösemittelkreislauf Lösemittel zur Verdünnung der Probe zugegeben werden kann;
• ein oder mehrere Probengefäße (5), in das bzw. in die die, vorzugsweise mit dem Lösemittel verdünnte, flüssige Probe geleitet werden kann;
• eine Probenverteilungseinheit, die ein drittes Multiportventil (3) mit mindestens 3 Ports und mindestens eine mit dem einen oder den mehreren Probengefäßen (5) verbundene Leitung (19) umfasst, wobei über die Leitung (19) die aus dem Behälter entnommene Probe in das mindestens eine Probengefäß (5) geleitet werden kann; und
• einen Inertgaskreislauf, in dem ein Inertgas vorliegt, wobei der Inertgaskreislauf mindestens ein Ventil (8), eine Zulaufleitung (9), eine Ablaufleitung (21) und Leitungen (13, 17, 18, 23), über die alle vorhandenen Multiportventile miteinander verbunden sind, umfasst, **dadurch gekennzeichnet, dass** die Vorrichtung zur automatisierten Probenahme eine
Druckregulationseinheit umfasst, mit der die Proben auf Umgebungsdruck gebracht werden kann, wobei die Druckregulationseinheit ein weiteres Multiportventil (22) mit einer Bremskapillare (24) umfasst und wobei das weitere Multiportventil (22) zwischen dem ersten Multiportventil (1) und dem dritten Multiportventil (3) angeordnet ist.

2. Vorrichtung nach Anspruch 1, wobei die Probenverteilungseinheit mindestens zwei Multiportventile (3, 4) aufweist.

3. Vorrichtung nach Anspruch 1 oder 2, wobei das Inertgas Stickstoff, Argon oder Helium ist.

4. Vorrichtung nach einem der vorhergehenden Ansprüche, wobei der Druck in dem Behälter, aus dem die Probe genommen werden soll, maximal 500 bar, vorzugsweise maximal 490 bar, besonders bevorzugt maximal 480 bar beträgt.

5. Vorrichtung nach einem der vorhergehenden Ansprüche, wobei zwei Ports des ersten Multiportventils (1) über zwei Schnittstellen mit dem Behälter, zwei mit Ports mit der Probenschleife (14) und zwei Ports mit den Leitungen des Inertgaskreislaufs verbunden sind.

6. Vorrichtung nach einem der vorhergehenden Ansprüche, wobei zwei Ports des zweiten Multiportventils (2) mit dem Vorratsbehälter (6) für das Lösemittel, d. h. einem Einlass und einem Auslass, zwei Ports mit der Lösemittelschleife (12) und zwei Ports mit den Leitungen des Intergaskreislaufs verbunden sind.

7. Vorrichtung nach einem der vorhergehenden Ansprüche, wobei zwei Ports des dritten Multiportventils (3) mit den Leitungen des Inertgaskreislaufs und der oder die anderen Ports mit dem mindestens einen Probengefäß (5) verbunden sind.

8. Vorrichtung nach einem der vorhergehenden Ansprüche, wobei das erste Multiportventil (1) auf mindestens zwei Ventilstellungen (I und II) eingestellt werden kann, wobei
• in der Stellung I die beiden Ports, die über die Schnittstellen mit dem Behälter verbunden sind, jeweils mit einem Port, der mit der Probenschleife verbunden ist, verknüpft sind, sodass die flüssige Probe der im Behälter vorliegenden Lösung über die Einlassschnittstelle durch die Probenschleife (14) und über die Auslassschnittstelle zurück zum Behälter geleitet wird, wodurch die Probenschleife (14) mit Probe befüllt wird; und
• in der Stellung II die beiden Ports, die über die Schnittstellen mit dem Behälter verbunden sind, miteinander verknüpft sind, sodass die Lösung ohne Durchfahren der Probenschleife (14) direkt zurück zum Behälter geleitet wird, und die beiden Ports, die mit der Probenschleife (14) verbunden sind, jeweils mit einem Port, der mit den Leitungen des Inertgaskreislaufs verbunden ist, verknüpft sind, sodass die in der Probenschleife (14) vorhandene Probe über den Inertgaskreislauf zur Probenverteilungseinheit und von dort zu mindestens einem Probengefäß (5) geleitet werden kann.

9. Vorrichtung nach einem der vorhergehenden Ansprüche, wobei das zweite Multiportventil (2) auf mindestens zwei Ventilstellungen (I und II) eingestellt werden kann, wobei
• in der Stellung I die beiden Ports, die mit dem Vorratsbehälter (6) verbunden sind, jeweils mit einem Port, der mit der Lösemittelschleife (12) verbunden ist, verknüpft sind, sodass das Lösemittel mithilfe der Pumpe aus dem Vorratsbehälter (6) über die Lösemittelschleife (12) zurück zum Vorratsbehälter (6) geleitet wird, wodurch die Lösemittelschleife (12) mit Lösemittel befüllt wird; und
• in der Stellung II die beiden Ports, die mit dem Vorratsbehälter (6) verbunden sind, miteinander verknüpft sind, sodass das Lösemittel mithilfe der Pumpe aus dem Vorratsbehälter (6) ohne Durchfahren der Lösemittelschleife (12) direkt zurück zum Vorratsbehälter (6) geleitet wird, und die beiden Ports, die mit der Lösemittelschleife (12) verbunden sind, jeweils mit einem Port, der mit den Leitungen des Inertgaskreislaufs verbunden ist, verknüpft sind, sodass das in der Lösemittelschleife (12) vorhandene Lösemittel über den Inertgaskreislauf zum ersten Multiportventil (1) geleitet werden kann.

10. Vorrichtung nach einem der vorhergehenden Ansprüche, wobei der Inertgaskreislauf, worüber alle vorhandenen Multiportventile miteinander verbunden sind, die folgenden Leitungen umfasst:
• eine Leitung (9), die über ein Ventil (8), mit dem die Inertgaszufuhr gesteuert werden kann, von einer Inertgasquelle zum zweiten Multiportventil (2) führt;
• eine Leitung (13), die vom zweiten Multiportventil (2) zum ersten Multiportventil (1) führt;
• eine Leitung (17), die vom ersten Multiportventil (1) zum weiteren Multiportventil (22) führt;
• eine Leitung (23), die vom weiteren Multiportventil (22) zum dritten Multiportventil (3), vorzugsweise zum mittleren Port des dritten Multiportventils (3), führt;
• mindestens eine Leitung (19), vorzugsweise zwei oder mehr Leitungen, die vom dritten Multiportventil (3) zu dem mindestens einen oder den mehreren Probengefäßen (5) führen;
• jeweils eine Leitung (20), die von jedem Probengefäß zum Restauslass führt, vorzugsweise jeweils eine Leitung (20), die von jedem Probengefäß zu einem der Ports des vierten Multiportventils (4) führt, wobei diese Ports jeweils auf einen zusätzlichen Port geschaltet werden können, und eine Leitung (21), die vom zusätzlichen Port des vierten Multiportventils (4) zum Restauslass führt.

11. Verfahren zur automatischen Probenahme einer flüssigen Probe aus einem Behälter, in dem ein Druck von mindestens 20 bar, vorzugsweise von mindestens 50 bar, weiterhin bevorzugt von mindestens 100 bar, besonders bevorzugt von mindestens 150 bar vorliegen kann, unter Verwendung der Vorrichtung nach einem der Ansprüche 1 bis 10, wobei
a) eine flüssige Probe aus dem Behälter entnommen und in der Probeschleife (14) des Probenkreislaufs zwischengelagert wird;
b) ein Lösemittel aus dem Vorratsbehälter entnommen und in der Lösemittelschleife (12) des Lösemittelkreislaufs zwischengelagert wird;
c) ein Inertgas in den Leitungen des Inertgaskreislaufs vorliegt; und
d) zur Entnahme der Probe die Stellung des vorhandenen Ventils (8) und der Multiportventile geändert wird, so dass das in der Lösemittelschleife (12) zwischengelagerte Lösemittel durch das Inertgas zu der in der Probeschleife (14) zwischengelagerten Probe geleitet wird und die mit dem Lösemittel verdünnte Probe von dort über die Probenverteilungseinheit zu einem oder mehreren Probengefäß (5) transportiert wird.

12. Verfahren nach Anspruch 11, wobei die Grundstellung der Ventile und der Multiportventile der Vorrichtung nach einem der Ansprüchen 1 bis 10 sich dadurch auszeichnet, dass:
• Das mindestens eine Ventil (8) des Inertgaskreislaufs geschlossen ist;
• das erste Multiportventil (1) auf Stellung I eingestellt ist;
• das zweite Multiportventil (2) auf Stellung I eingestellt ist;
• das weitere Multiportventil (22) auf Stellung I eingestellt ist, wobei die Leitung vom ersten Multiportventil (1) und zum dritten Multiportventil (3) über das weitere Multiportventil (22) so miteinander verbunden sind, dass die Bremskapillare (24) nicht durchlaufen wird;
• der mittlere Port des dritten Multiportventils (3) auf den Port geschaltet, der zum Restauslass oder, sofern vorhanden, zum vierten Multiportventil (4) führt; und
• der Port des vierten Multiportventils (4), sofern vorhanden, der mit dem dritten Multiportventil (3) verbunden ist, ist auf den mittleren Port des vierten Multiportventils (4) geschaltet ist, wobei der mittlere Port zum Restauslass führt.

13. Verfahren nach Anspruch 11 oder 12, wobei zunächst das Ventil (8) des Inertgaskreislaufs geöffnet wird.

14. Verfahren nach Anspruch 12 oder 13, wobei zur Entnahme der Probe die oben beschriebene Grundstellung der vorhandenen Ventile inkl. Multiportventile nach der folgenden Reihenfolge geändert wird:
1) das mindestens eine Ventil (8) des Inertgaskreislaufs wird geöffnet, vorzugsweise für mindestens 5 Sekunden und bis zu 120 Sekunden, besonders bevorzugt für bis zu 90 Sekunden;
2) der mittlere Port des dritten Multiportventils (3) wird auf den Port geschaltet, der zu einem Probengefäß (5) führt, um das Probengefäß (5) mit Inertgas zu Spülen, und optional wird ein Port des vierten Multiportventils (4), der vom Probengefäß (5) kommt, wird auf den mittleren Port des vierten Multiportventils (4) in Richtung Restauslass geschaltet;
3) das mindestens eine Ventil (8) des Inertgaskreislaufs wird geschlossen;
4) das zweite Multiportventil (2) wird auf Stellung II geschaltet;
5) das erste Multiportventil (1) wird auf Stellung II geschaltet;
6) das Ventil (8) des Inertgaskreislaufs wird geöffnet;
7) der mittlere Port des dritten Multiportventils (3) wird auf den Port geschaltet, der zum Restauslass oder - sofern vorhanden - zum vierten Multiportventil (4) führt, wobei wenn der mittlere Port des dritten Multiportventils (3) zum vierten Multiportventil (4) führt, ein Port des Multiportventils (4) auf den Port geschaltet wird, der zum Restauslass führt; und
8) alle Ventile inkl. Multiportventile gehen wieder in die Grundstellung.

15. Verfahren nach einem der Ansprüche 11 bis 14, wobei die Gesamtdauer des Verfahrens der Schritte 1) bis 8) maximal 480 Sekunden, vorzugsweise maximal 300 Sekunden, besonders bevorzugt maximal 200 Sekunden beträgt.

## Claims

1. Apparatus for automated sampling of a liquid sample from a vessel in which there may be a pressure of at least 20 bar, preferably of at least 50 bar, further preferably of at least 100 bar, more preferably of at least 150 bar, wherein the apparatus comprises the following:
• a sample circuit comprising a first multiport valve (1) having at least 6 ports, a feed conduit (15), a drain conduit (16) and a sample loop (14), wherein a liquid sample of the solution present in the vessel can be taken via the sample circuit;
• a solvent circuit comprising a reservoir vessel (6) for the solvent, a second multiport valve (2) having at least 6 ports, a pump, a feed conduit (11), a drain conduit (10) and a solvent loop (12), wherein solvent for dilution of the sample can be added via the solvent circuit;
• one or more sample vessels (5) into which the liquid sample, preferably diluted with the solvent, can be routed;
• a sample distribution unit comprising a third multiport valve (3) having at least 3 ports and at least one conduit (19) connected to the one or more sample vessels (5), wherein the sample taken from the vessel can be routed via the conduit (19) into the at least one sample vessel (5); and
• an inert gas circuit in which there is an inert gas, wherein the inert gas circuit comprises at least one valve (8), a feed conduit (9), a drain conduit (21), and conduits (13, 17, 18, 23) via which all the multiport valves present are connected to one another, **characterized in that** the apparatus for automated sampling comprises a pressure regulation unit with which the samples can be brought to ambient pressure, wherein the pressure regulation unit comprises a further multiport valve (22) having a restriction capillary (24) and wherein the further multiport valve (22) is disposed between the first multiport valve (1) and the third multiport valve (3).

2. Apparatus according to Claim 1, wherein the sample distribution unit has at least two multiport valves (3, 4).

3. Apparatus according to Claim 1 or 2, wherein the inert gas is nitrogen, argon or helium.

4. Apparatus according to any of the preceding claims, wherein the pressure in the vessel from which the sample is to be taken is not more than 500 bar, preferably not more than 490 bar, more preferably not more than 480 bar.

5. Apparatus according to any of the preceding claims, wherein two ports of the first multiport valve (1) are connected via two interfaces to the vessel, two ports to the sample loop (14), and two ports to the conduits of the inert gas circuit.

6. Apparatus according to any of the preceding claims, wherein two ports of the second multiport valve (2) are connected to the reservoir vessel (6) for the solvent, i.e. one inlet and one outlet, two ports to the solvent loop (12), and two ports to the conduits of the inert gas circuit.

7. Apparatus according to any of the preceding claims, wherein two ports of the third multiport valve (3) are connected to the conduits of the inert gas circuit, and the other port(s) to the at least one sample vessel (5).

8. Apparatus according to any of the preceding claims, wherein the first multiport valve (1) can be adjusted between at least two valve settings (I and II), wherein
• in setting I the two ports that are connected via the interfaces to the vessel are each linked by a port connected to the sample loop, such that the liquid sample of the solution present in the vessel is routed via the inlet interface through the sample loop (14) and via the outlet interface back to the vessel, as a result of which the sample loop (14) is filled with sample; and
• in setting II the two ports that are connected via the interfaces to the vessel are linked to one another, such that the solution is routed directly back to the vessel without passing through the sample loop (14), and the two ports that are connected to the sample loop (14) are each linked to a port connected to the conduits of the inert gas circuit, such that the sample present in the sample loop (14) can be routed via the inert gas circuit to the sample distribution unit and thence to at least one sample vessel (5).

9. Apparatus according to any of the preceding claims, wherein the second multiport valve (2) can be adjusted between at least two valve settings (I and II), wherein
• in setting I the two ports that are connected to the reservoir vessel (6) are each linked to a port connected to the solvent loop (12), such that the solvent is routed with the aid of the pump from the reservoir vessel (6) via the solvent loop (12) back to the reservoir vessel (6), as a result of which the solvent loop (12) is filled with solvent; and
• in setting II the two ports that are connected to the reservoir vessel (6) are linked to one another, such that the solvent is routed with the aid of the pump from the reservoir vessel (6) directly back to the reservoir vessel (6) without passing through the solvent loop (12), and the two ports connected to the solvent loop (12) are each linked to a port connected to the conduits of the inert gas circuit, such that the solvent present in the solvent loop (12) can be routed via the inert gas circuit to the first multiport valve (1).

10. Apparatus according to any of the preceding claims, wherein the inert gas circuit via which all the multiport valves present are connected to one another comprises the following conduits:
• a conduit (9) that leads from an inert gas source to the second multiport valve (2) via a valve (8) that can be used to control the inert gas supply;
• a conduit (13) that leads from the second multiport valve (2) to the first multiport valve (1);
• a conduit (17) that leads from the first multiport valve (1) to the further multiport valve (22);
• a conduit (23) that leads from the further multiport valve (22) to the third multiport valve (3), preferably to the middle port of the third multiport valve (3);
• at least one conduit (19), preferably two or more conduits, that lead(s) from the third multiport valve (3) to the at least one or more than one sample vessel (5);
• one conduit (20) each that leads from each sample vessel to the residue outlet, preferably one conduit (20) each that leads from each sample vessel to one of the ports of the fourth multiport valve (4), where these ports can each be switched to an additional port, and a conduit (21) that leads from the additional port of the fourth multiport valve (4) to the residue outlet.

11. Method of automated sampling of a liquid sample from a vessel in which there may be a pressure of at least 20 bar, preferably of at least 50 bar, further preferably of at least 100 bar, more preferably of at least 150 bar, using the apparatus according to any of Claims 1 to 10, wherein
a) a liquid sample is taken from the vessel and stored intermediately in the sample loop (14) of the sample circuit;
b) a solvent is taken from the reservoir vessel and stored intermediately in the solvent loop (12) of the solvent circuit;
c) an inert gas is present in the conduits of the inert gas circuit; and
d) the sample is taken by altering the position of the valve (8) present and of the multiport valves such that the solvent stored intermediately in the solvent loop (12) is routed by the inert gas to the sample stored intermediately in the sample loop (14), and the sample diluted with the solvent is transported thence via the sample distribution unit to one or more sample vessels (5).

12. Method according to Claim 11, wherein the default position of the valves and of the multiport valves of the apparatus according to any of Claims 1 to 10 has the following features:
• the at least one valve (8) of the inert gas circuit is closed;
• the first multiport valve (1) is set to setting I;
• the second multiport valve (2) is set to setting I;
• the further multiport valve (22) is set to setting I, wherein the conduits from the first multiport valve (1) and to the third multiport valve (3) via the further multiport valve (22) are connected to one another such that the restriction capillary (24) is bypassed;
• the middle port of the third multiport valve (3) is switched to the port that leads to the residue outlet or, if present, to the fourth multiport valve (4); and
• the port of the fourth multiport valve (4), if present, which is connected to the third multiport valve (3) is switched to the middle port of the fourth multiport valve (4), wherein the middle port leads to the residue outlet.

13. Method according to Claim 11 or 12, wherein the valve (8) of the inert gas circuit is opened first.

14. Method according to Claim 12 or 13, wherein the sample is taken by altering the above-described default position of the valves present, including multiport valves, according to the following sequence:
1) the at least one valve (8) of the inert gas circuit is opened, preferably for at least 5 seconds and up to 120 seconds, more preferably for up to 90 seconds;
2) the middle port of the third multiport valve (3) is switched to the port that leads to a sample vessel (5), in order to purge the sample vessel (5) with inert gas, and a port of the fourth multiport valve (4) that comes from the sample vessel (5) is optionally switched to the middle port of the fourth multiport valve (4) toward the residue outlet;
3) the at least one valve (8) of the inert gas circuit is closed;
4) the second multiport valve (2) is switched to setting II;
5) the first multiport valve (1) is switched to setting II;
6) the valve (8) of the inert gas circuit is opened;
7) the middle port of the third multiport valve (3) is switched to the port that leads to the residue outlet or - if present - to the fourth multiport valve (4), wherein, when the middle port of the third multiport valve (3) leads to the fourth multiport valve (4), a port of the multiport valve (4) is switched to the port that leads to the residue outlet;
and
8) all valves, including multiport valves, go back to the default position.

15. Method according to any of Claims 11 to 14, wherein the total duration of the method steps 1) to 8) is not more than 480 seconds, preferably not more than 300 seconds, more preferably not more than 200 seconds.

## Revendications

1. Dispositif pour le prélèvement automatisé d'un échantillon liquide dans un récipient dans lequel une pression d'au moins 20 bars, de préférence d'au moins 50 bars, de préférence encore d'au moins 100 bars, de façon particulièrement préférée d'au moins 150 bars, peut être présente, le dispositif comprenant les éléments suivants :
• un circuit d'échantillonnage, qui comprend une première vanne multivoies (1) avec au moins 6 voies, une conduite d'alimentation (15), une conduite d'évacuation (16) et une boucle d'échantillonnage (14), un échantillon liquide de la solution présente dans le récipient étant apte à être prélevé via le circuit d'échantillonnage ;
• un circuit de solvant, qui comprend un récipient de stockage (6) pour le solvant, une deuxième vanne multivoies (2) avec au moins 6 voies, une pompe, une conduite d'alimentation (11), une conduite d'évacuation (10) et une boucle de solvant (12), le solvant étant apte à être ajouté via le circuit de solvant pour diluer l'échantillon ;
• un ou plusieurs récipients à échantillons (5) dans lesquels l'échantillon liquide, de préférence dilué avec le solvant, est apte à être introduit ;
• une unité de distribution d'échantillon, qui comprend une troisième vanne multivoies (3) avec au moins 3 voies et au moins une conduite (19) reliée à un ou plusieurs récipients d'échantillon (5), l'échantillon prélevé dans le récipient étant apte à être acheminé par la conduite (19) dans ledit au moins un récipient à échantillon (5) ; et
• un circuit de gaz inerte dans lequel se trouve un gaz inerte, le circuit de gaz inerte comprenant au moins une vanne (8), une conduite d'alimentation (9), une conduite d'évacuation (21) et des conduites (13, 17, 18, 23) par lesquelles toutes les vannes multivoies présentes sont reliées entre elles, **caractérisé en ce que** le dispositif d'échantillonnage automatisé comprend une unité de régulation de pression permettant de ramener les échantillons à la pression ambiante, l'unité de régulation de pression comprenant une autre vanne multivoies (22) avec un capillaire de freinage (24), ladite autre vanne multivoies (22) étant agencée entre la première vanne multivoies (1) et la troisième vanne multivoies (3).

2. Dispositif selon la revendication 1, dans lequel l'unité de distribution d'échantillons comprend au moins deux vannes multivoies (3, 4).

3. Dispositif selon la revendication 1 ou la revendication 2, dans lequel le gaz inerte est de l'azote, de l'argon ou de l'hélium.

4. Dispositif selon l'une des revendications précédentes, dans lequel la pression dans le récipient duquel l'échantillon doit être prélevé est de 500 bars maximum, de préférence de 490 bars maximum, et de manière particulièrement préférée, de 480 bars maximum.

5. Dispositif selon l'une des revendications précédentes, dans lequel deux voies de la première vanne multivoies (1) sont reliées au récipient de stockage par deux interfaces, deux voies sont reliées à la boucle d'échantillonnage (14) et deux voies sont reliées aux conduites du circuit de gaz inerte.

6. Dispositif selon l'une des revendications précédentes, dans lequel deux voies de la deuxième vanne multivoies (2) sont reliées au récipient de stockage (6) pour le solvant, c'est-à-dire une entrée et une sortie, deux voies sont reliées à la boucle de solvant (12) et deux voies sont reliées aux conduites du circuit de gaz inerte.

7. Dispositif selon l'une des revendications précédentes, dans lequel deux voies de la troisième vanne multivoies (3) sont reliées aux conduites du circuit de gaz inerte et la ou les autres voies sont reliées à au moins un récipient à échantillon (5).

8. Dispositif selon l'une des revendications précédentes, dans lequel la première vanne multivoies (1) est apte à être réglée sur au moins deux positions de vanne (I et II), dans lequel
• en position I, les deux voies reliées au récipient par les interfaces sont respectivement reliées à une voie reliée à la boucle d'échantillonnage, de sorte que l'échantillon liquide de la solution présente dans le récipient est acheminé via l'interface d'entrée à travers la boucle d'échantillonnage (14) et revient au récipient via l'interface de sortie, ce qui permet de remplir la boucle d'échantillonnage (14) avec l'échantillon ; et
• en position II, les deux voies reliées au récipient de stockage par les interfaces sont reliées entre elles de sorte que la solution est renvoyée directement au récipient de stockage sans passer par la boucle d'échantillonnage (14), et les deux voies reliées à la boucle d'échantillonnage (14) sont reliées chacune à une voie reliée aux conduites du circuit de gaz inerte, de sorte que l'échantillon présent dans la boucle d'échantillonnage (14) est apte à être acheminé via le circuit de gaz inerte vers l'unité de distribution d'échantillons et, de là, vers au moins un récipient à échantillon (5).

9. Dispositif selon l'une des revendications précédentes, dans lequel la deuxième vanne multivoies (2) est apte à être réglée sur au moins deux positions de vanne (I et II), dans lequel
• en position I, les deux voies qui sont reliées au récipient de stockage (6) sont respectivement reliées à une voie qui est reliée à la boucle de solvant (12), de sorte que le solvant est renvoyé du récipient de stockage (6) vers le récipient de stockage (6) au moyen de la pompe via la boucle de solvant (12), ce qui remplit la boucle de solvant (12) avec du solvant ; et
• en position II, les deux voies reliées au récipient de stockage (6) sont reliées entre elles, de sorte que le solvant est renvoyé directement du récipient de stockage (6) au récipient de stockage (6) au moyen de la pompe sans passer par la boucle de solvant (12), et les deux voies reliées à la boucle de solvant (12) sont chacune reliées à une voie reliée aux conduites du circuit de gaz inerte, de sorte que le solvant présent dans la boucle de solvant (12) est apte à être acheminé vers la première vanne multivoies (1) via le circuit de gaz inerte.

10. Dispositif selon l'une des revendications précédentes, dans lequel le circuit de gaz inerte, par lequel toutes les vannes multivoies existantes sont reliées entre elles, comprend les conduites suivantes :
• une conduite (9) qui mène d'une source de gaz inerte à la deuxième vanne multivoies (2) via une vanne (8) permettant de commander l'alimentation en gaz inerte ;
• une conduite (13) qui mène de la deuxième vanne multivoies (2) à la première vanne multivoies (1) ;
• une conduite (17) qui mène de la première vanne multivoies (1) à ladite autre vanne multivoies (22) ;
• une conduite (23) qui mène de ladite autre vanne multivoies (22) à la troisième vanne multivoies (3), de préférence à la voie centrale de la troisième vanne multivoies (3) ;
• au moins une conduite (19), de préférence deux ou plusieurs conduites, qui va de la troisième vanne multivoies (3) auxdits au moins un ou plusieurs récipients à échantillons (5) ;
• une conduite (20) qui mène de chaque récipient à échantillon à la sortie restante, de préférence une conduite (20) allant de chaque récipient à échantillon à l'une des voies de la quatrième vanne multivoies (4), ces voies étant aptes à être commutées chacune sur une voie supplémentaire, et une conduite (21) qui mène de ladite voie supplémentaire de la quatrième vanne multivoies (4) à la sortie restante.

11. Procédé pour le prélèvement automatique d'un échantillon liquide dans un récipient dans lequel peut régner une pression d'au moins 20 bars, de préférence d'au moins 50 bars, de préférence encore d'au moins 100 bars, de manière particulièrement préférée, d'au moins 150 bars, en utilisant le dispositif selon l'une des revendications 1 à 10, dans lequel
a) un échantillon liquide est prélevé dans le récipient de stockage et est stocké temporairement dans la boucle d'échantillonnage (14) du circuit d'échantillonnage ;
b) un solvant est prélevé du récipient de stockage et est stocké temporairement dans la boucle de solvant (12) du circuit de solvant ;
c) un gaz inerte est présent dans les conduites du circuit de gaz inerte ; et
d) pour prélever l'échantillon, la position de la vanne existante (8) et des vannes multivoies est modifiée de sorte que le solvant stocké temporairement dans la boucle de solvant (12) soit acheminé par le gaz inerte vers l'échantillon stocké temporairement dans la boucle d'échantillonnage (14) et que l'échantillon dilué avec le solvant soit transporté de là vers un ou plusieurs récipients d'échantillons (5) via l'unité de distribution d'échantillons.

12. Procédé selon la revendication 11, dans lequel la position de base des vannes ainsi que des vannes multivoies du dispositif selon l'une des revendications 1 à 10 est **caractérisée en ce que** :
• ladite au moins une vanne (8) du circuit de gaz inerte est fermée ;
• la première vanne multivoies (1) est réglée sur la position I ;
• la deuxième vanne multivoies (2) est réglée sur la position I ;
• ladite autre vanne multivoies (22) est réglée sur la position I, la conduite menant de la première vanne multivoies (1) à la troisième vanne multivoies (3) étant reliée à ladite autre vanne multivoies (22) de telle sorte que le capillaire de freinage (24) ne soit pas traversé ;
• la voie centrale de la troisième vanne multivoies (3) est connectée à la voie menant à la sortie restante ou, si elle est présente, à la quatrième vanne multivoies (4) ; et
• la voie de la quatrième vanne multivoies (4), si elle existe, qui est reliée à la troisième vanne multivoies (3), est connectée à la voie centrale de la quatrième vanne multivoies (4), la voie centrale menant à la sortie restante.

13. Procédé selon la revendication 11 ou la revendication 12, dans lequel la vanne (8) du circuit de gaz inerte est d'abord ouverte.

14. Procédé selon la revendication 12 ou la revendication 13, dans lequel, pour prélever l'échantillon, la position de base décrite ci-dessus des vannes existantes, y compris les vannes multivoies, est modifiée selon la séquence suivante :
1) ladite au moins une vanne (8) au moins du circuit de gaz inerte est ouverte, de préférence pendant au moins 5 secondes et jusqu'à 120 secondes, de préférence jusqu'à 90 secondes ;
2) la voie centrale de la troisième vanne multivoies (3) est commutée sur la voie menant à un récipient à échantillon (5) afin de purger le récipient à échantillon (5) avec du gaz inerte, et, de façon optionnelle, une voie de la quatrième vanne multivoies (4) provenant du récipient à échantillon (5) est commutée sur l'orifice central de la quatrième vanne multivoies (4) en direction de la sortie restante ;
3) ladite au moins une vanne (8) du circuit de gaz inerte est fermée ;
4) la deuxième vanne multivoies (2) est commutée en position II ;
5) la première vanne multivoies (1) est commutée en position II ;
6) la vanne (8) du circuit de gaz inerte est ouverte ;
7) la voie centrale de la troisième vanne multivoies (3) est commutée sur la voie menant à la sortie restante ou, si elle est présente, à la quatrième vanne multivoies (4), sachant que si la voie centrale de la troisième vanne multivoies (3) mène à la quatrième vanne multivoies (4), une voie de la vanne multivoies (4) est commutée sur la voie menant à la sortie restante ;
et
8) toutes les vannes, y compris les vannes multivoies, reviennent en position initiale.

15. Procédé selon l'une des revendications 11 à 14, dans lequel la durée totale du procédé des étapes 1) à 8) est de 480 secondes au maximum, de préférence de 300 secondes au maximum, de manière particulièrement préférée de 200 secondes au maximum.
